# EUROPEAN PATENT APPLICATION

(11) **EP 4 596 301 A1**
(43) Date of publication of application: **06.08.2025**
(21) Application number: 24221238.9
(22) Date of filing: 18.12.2024
(51) Int. Cl.: B60L 15/20, H02P 6/10

(54) **MOTOR JITTER SUPPRESSION CONTROL METHOD, SYSTEM AND VEHICLE**

(30) Priority: 01.02.2024 CN 202410147792
(71) Applicant: Nio Technology (Anhui) Co., Ltd, Hefei City, Anhui 230611 (CN)
(72) Inventor: WU, Guoliang, Hefei City, Anhui, 230611 (CN); LIU, Ze, Hefei City, Anhui, 230611 (CN); SHI, Liang Salyan, Hefei City, Anhui, 230611 (CN); LAI, Xiangxiang, Hefei City, Anhui, 230611 (CN); ZHANG, Hongchao, Hefei City, Anhui, 230611 (CN); XIAO, Bohong, Hefei City, Anhui, 230611 (CN); CHEN, Shixing, Hefei City, Anhui, 230611 (CN); XING, Zhile, Hefei City, Anhui, 230611 (CN); REN, Wenqi, Hefei City, Anhui, 230611 (CN)
(74) Representative: Vossius & Partner Patentanwälte Rechtsanwälte mbB

(57) **Abstract**

The present application relates to the technical field of new energy vehicles and provides a motor jitter suppression control method, system and vehicle. The method comprises: acquiring wheel speed information of a vehicle and calculating a jitter amount of a wheel speed based on the wheel speed information; acquiring motor actual torque and calculating a torque difference between the motor actual torque and motor target torque; and activating a jitter control module to perform jitter control in response to the wheel speed of the vehicle falling below a set wheel speed, an absolute value of the jitter amount exceeding a calibration threshold and the torque difference equaling zero, wherein performing the jitter control comprises: acquiring compensation torque based on the jitter amount and controlling a motor to output the compensation torque to suppress jitter of a motor speed. Accordingly, the technical solution of the present application enables the proactive execution of motor jitter control by automatically recognizing road excitations and intelligently determining the conditions for executing jitter control, thereby effectively reducing vehicle vibrations, decreasing vehicle noise levels and enhancing ride comfort.

## Description

### TECHNICAL FIELD

The present application relates to the technical field of new energy vehicles, specifically to a motor jitter suppression control method, system and vehicle.

### BACKGROUND

During low-speed driving of a vehicle, its motor, being deactivated and unloaded, may exhibit jitter when the vehicle encounters road excitations, which causes further jitter in the drivetrain comprising the motor, as well as the gear train and reduction gearbox-both of which are connected to the motor. This results in significant noise, adversely affecting the vehicle's ride comfort.

### SUMMARY

The present application is intended for providing a motor jitter suppression control method, system, and vehicle to solve or mitigate at least part of the issues mentioned in the background art.

To achieve one of the aforementioned objectives, the present application provides, according to one aspect, a motor jitter suppression method, the method comprising: acquiring wheel speed information of a vehicle and calculating a jitter amount of a wheel speed based on the wheel speed information; acquiring motor actual torque and calculating a torque difference between the motor actual torque and motor target torque; and activating a jitter control module to perform jitter control in response to the wheel speed of the vehicle falling below a set wheel speed, an absolute value of the jitter amount exceeding a calibration threshold and the torque difference equaling zero, wherein performing the jitter control comprises: acquiring compensation torque based on the jitter amount and controlling a motor to output the compensation torque to suppress jitter of a motor speed.

In addition to one or more of the aforementioned features, or as an alternative solution, in another embodiment, the method further comprises detecting a driving mode of the vehicle and an activation status of one or more chassis functional systems, and the jitter control module is further activated in response to the following conditions: the driving mode is a set mode and none of the one or more chassis functional systems are activated.

In addition to one or more of the aforementioned features, or as an alternative solution, in another embodiment, acquiring the compensation torque based on the jitter amount comprises: querying, based on the jitter amount, a lookup table of jitter amounts and corresponding compensation torques obtained through experimentation, to obtain the compensation torque.

In addition to one or more of the aforementioned features, or as an alternative solution, in another embodiment, acquiring the wheel speed information of the vehicle comprises separately acquiring the wheel speeds of a first wheel and a second wheel at both ends of a wheel axle of the vehicle; and calculating the jitter amount of the wheel speed based on the wheel speed information comprises: calculating an average value of the wheel speeds of the first and second wheels as a reference wheel speed, and calculating a second derivative of the reference wheel speed as the jitter amount.

In addition to one or more of the aforementioned features, or as an alternative solution, in another embodiment, controlling the motor to output the compensation torque comprises: turning on a switch tube in a motor controller to control the motor to output the compensation torque.

In addition to one or more of the aforementioned features, or as an alternative solution, in another embodiment, controlling the motor to output the compensation torque comprises: controlling the motor to output the compensation torque for a set duration.

In addition to one or more of the aforementioned features, or as an alternative solution, in another embodiment, the method further comprises: resetting a timing of the set duration when the jitter control module is re-activated within the set duration, such that the motor outputs the compensation torque for the set duration from the time the jitter control module is reactivated.

In addition to one or more of the aforementioned features, or as an alternative solution, in another embodiment, controlling the motor to output the compensation torque comprises: controlling a front motor connected to a front wheel axle of the vehicle to output a first compensation torque, and controlling a rear motor connected to a rear wheel axle of the vehicle to output a second compensation torque in a direction opposite to the first compensation torque.

To achieve one of the aforementioned objectives, the present application, according to another aspect, provides a motor jitter suppression control system for performing the method described in the aforementioned aspects. The system comprises: a wheel speed detector configured to detect wheel speed information of a vehicle and calculate a jitter amount of a wheel speed based on the wheel speed information; a torque detector configured to detect motor actual torque and calculate a torque difference between the motor actual torque and motor target torque; a determination module communicatively connected to the wheel speed detector and the torque detector and configured to acquire the wheel speed information and the jitter amount from the wheel speed detector, and the torque difference from the torque detector, wherein the determination module is configured to issue an activation signal upon determining that the wheel speed falls below a set wheel speed, an absolute value of the jitter amount exceeds a calibration threshold, and the torque difference equals zero; and a jitter control module communicatively connected to the determination module and a motor, wherein the jitter control module is configured to be activated in response to receiving the activation signal, thus obtaining a compensation torque based on the jitter amount and transmitting a compensation torque signal to the motor to control the motor to output the compensation torque.

In addition to one or more of the aforementioned features, or as an alternative solution, in another embodiment, the system further comprises a driving mode detector and a chassis function detector communicatively connected to the determination module, the driving mode detector being configured to detect a driving mode of the vehicle, and the chassis function detector being configured to detect an activation status of one or more chassis functional systems of the vehicle, wherein the one or more chassis functional systems comprise one or more of an anti-lock braking system, a traction control system, and a drag torque control system, and the determination module is configured to acquire the driving mode detected from the driving mode detector and information of the activation status from the chassis function detector, and to issue the activation signal upon determining that the driving mode is a set mode and none of the one or more chassis functional systems are activated.

To achieve one of the aforementioned objectives, the present application, according to another aspect, provides a vehicle, the vehicle comprising the motor jitter suppression control system described in the aforementioned aspects.

The motor jitter suppression control method, system and vehicle, according to the present application, enable the proactive execution of motor jitter control by automatically recognizing road excitations and intelligently determining the conditions for executing jitter control, thereby effectively reducing vehicle vibrations, decreasing vehicle noise levels, and enhancing ride comfort.

### BRIEF DESCRIPTION OF THE DRAWINGS

With reference to the drawings, the disclosure of the present application will be more readily understood. It should be understood that these drawings are provided for illustrative purposes only, but not intended to limit the scope of protection of the present application. In the drawings:
FIG. 1 is a flowchart of the motor jitter suppression control method according to an embodiment of the present application;
FIG. 2 is a schematic diagram of the structure of the motor jitter suppression control system according to an embodiment of the present application, to perform the control method shown in FIG. 1;
FIG. 3 shows vehicle parameter curves under an exemplary operating condition without employing the control method shown in FIG. 1;
FIG. 4 shows vehicle parameter curves under an exemplary operating condition when the jitter control module is employed but not activated to exert intelligent control; and
FIG. 5 shows vehicle parameter curves under an exemplary operating condition with the employment of the control method shown in FIG. 1.

### LIST OF REFERENCE NUMERALS

- 10 Wheel Speed Detector
- 20 Torque Detector
- 30 Driving Mode Detector
- 40 Chassis Function Detector
- 50 Determination Module
- 60 Jitter Control Module
- 70 Motor
- A Vehicle Acceleration Curve
- V Vehicle Speed Curve
- D Vehicle Wheel Speed Jitter Amount Curve
- N Motor Speed Curve
- T Compensation Torque Curve
- M Activation Status of Jitter Control Module
- M1 Activation Status of Jitter Control Module under an Operating Condition
- M2 Activation Status of Jitter Control Module under another Operating Condition
- L1 Activation Status of ABS
- L2 Activation Status of TCS
- L3 Activation Status of DTC
- t1 First Auxiliary Line
- t2 Second Auxiliary Line
- t3 Third Auxiliary Line
- t4 Fourth Auxiliary Line

### DETAILED DESCRIPTION OF EMBODIMENTS

The present application will be described below in detail, with reference to exemplary embodiments illustrated in the accompanying drawings. However, it should be understood that the present application may be implemented in various forms and should not be construed as being limited to the embodiments described herein. The embodiments are provided to make the disclosure of the present application more complete and clear, and to fully convey the concept of the present application to those skilled in the art.

Moreover, regarding any individual technical features described or implied in the embodiments referenced herein, or any individual technical features shown or implied in the accompanying drawings, those skilled in the art could readily conceive further making suitable combinations or reductions of these technical features (or their equivalents), thereby deriving additional embodiments of the present application that may not have been directly mentioned in the description-such embodiments would still not fall out of the scope of the technical concept of the present application.

As should be noted, in the description of the present application, terms such as "upper", "lower", "left", "right", "inside" and "outside" that indicate direction or positional relationships are based on the directions or positional relationships shown in the drawings. These terms are intended merely for convenience of description, and should not be interpreted as indicating or implying that the corresponding devices or components would necessarily have a specific orientation, or be constructed and operated in a specific orientation. Thus, these terms should not be understood as limiting the present application. In addition, ordinal terms such as "first", "second" and the like are employed solely for descriptive purposes and should not be interpreted as indicating or implying relative importance.

Furthermore, it should be clarified that, in the description of the present application, unless otherwise definitely specified or limited, the terms "mounted", "connected" and the like should be broadly interpreted. For example, these terms may refer to fixed connections, detachable connections or integrated connections, may refer to mechanical connections, electrical connections or both, may refer to direct connections or connections made through intermediate media. Those skilled in the art will understand the specific meaning of these terms in the context of the present application as specific circumstances dictate.

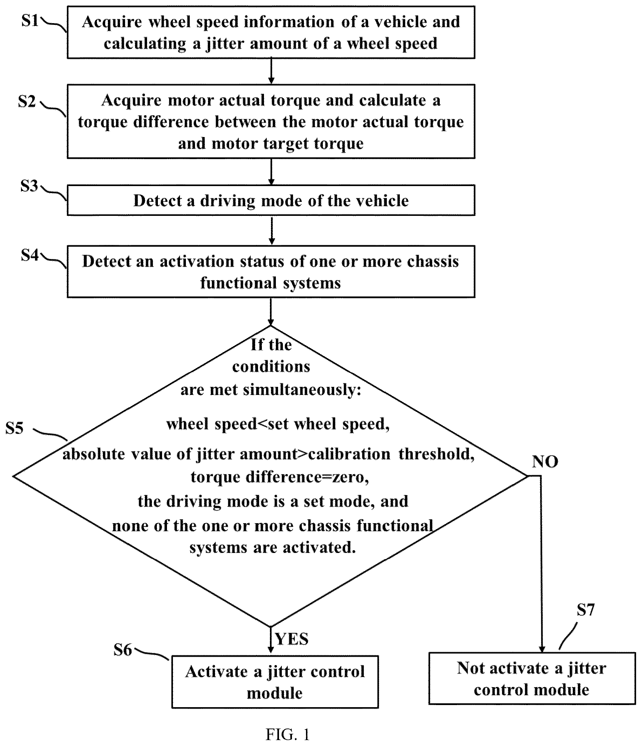

FIG. 1 is a flowchart of the motor jitter suppression control method according to an embodiment of the present application. The method comprises the following steps:
- **S1:** acquiring wheel speed information of a vehicle and calculating a jitter amount of a wheel speed based on the wheel speed information;
- **S2:** acquiring motor actual torque and calculating a torque difference between the motor actual torque and motor target torque.
- **S3:** detecting a driving mode of the vehicle;
- **S4:** detecting an activation status of one or more chassis functional systems related to driving or braking;
- **S5:** determining if the following conditions are met: the wheel speed falls below a set wheel speed, an absolute value of the jitter amount exceeds a calibration threshold, the torque difference equals zero, the driving mode is a set mode and none of the one or more chassis functional systems are activated; proceeding to S6, if the conditions are all met; otherwise, proceeding to S7;
- **S6:** activating a jitter control module 60 to perform jitter control;
- **S7:** not activating the jitter control module 60.

Executing the jitter control thereof comprises: acquiring compensation torque based on the jitter amount and controlling a motor to output the compensation torque, thus enabling a smoother fit of the transmission gears between the motor, a gear train and a reduction gearbox (in the present application, the jitter control may also be referred to as gear meshing control), which, in this way, suppress the jitter of the motor speed, thus reducing vehicle vibration and noise. Acquiring the compensation torque based on the jitter amount may specifically comprise: querying, based on the jitter amount, a lookup table of jitter amounts and corresponding compensation torques obtained through experimentation, to obtain the compensation torque. In a more specific embodiment, controlling the motor to output the compensation torque may involve requesting to turn on a switch tube in the motor controller to allow the motor to output the compensation torque.

The conditions in S5 can be understood as follows:
The wheel speed falling below a set speed (e.g., 30 kph) indicates that the vehicle is operating within a low-speed range under investigation. Treating the wheel speed jitter as road excitation, if the absolute value of the jitter exceeds the calibration threshold, it signifies intense road excitation, which, at this time, will cause fluctuations in motor speed; when the absolute value of the torque difference between the motor actual torque and the motor target torque is greater than zero, it indicates that the motor is under load, making the jitter control unnecessary at this moment; however, if the torque difference is zero, the jitter control is permissible.

Further, the vehicle's driving mode may comprise normal mode, sport mode, comfort mode and economy mode. The aforementioned set mode may comprise one or more of these modes. Through determining whether the driving mode is the set mode, it is possible to ascertain whether a passenger expects the jitter control. For instance, in a preset condition that the set mode is comfort mode, if the current driving mode is also identified as comfort mode, it suggests that the passenger expects a lower level of vehicle vibration and noise, i.e., desires motor jitter suppression. In such cases, activation of the jitter control module 60 is allowed.

Additionally, the one or more chassis functional systems related to driving or braking may comprise one or more of an anti-lock braking system (ABS), a traction control system (TCS), and a drag torque control system (DTC). When any of these chassis functional systems are in an activation status, it indicates that the vehicle is undergoing corresponding chassis control, and thus, activation of the jitter control module 60 is not permitted, nor interruption of the jitter control module 60 while its activation is in progress.

The motor jitter suppression control method described herein enables the automatic recognition of road excitations through the monitoring of information such as wheel speed, motor torque, driving mode, and vehicle movement state, as well as intelligent determination of the conditions for executing the jitter control, thereby proactively performing the motor jitter control. In doing so, vehicle vibration is effectively reduced and noise levels are lowered, with ride comfort being enhanced.

It should be understood that the flowchart shown in FIG. 1 merely illustrates an exemplary embodiment of the motor jitter suppression control method of the present application. In other optional embodiments, the execution order of steps S1, S2, S3 and S4 may be appropriately rearranged; or, in optional embodiments, some steps may be omitted, such as removing step S3 and/or S4 (and correspondingly simplifying the conditions in step S5), to make the operating logic of the control method more concise and improve its execution efficiency; or, additional steps may be added properly to make the activation determination of the jitter control module 60 more precise or to further refine the control process for motor jitter suppression.

Further specific implementations, refinements, or improvements to the motor jitter suppression control method will be described through exemplary explanations below, to improve its operational efficiency, reliability, or other enhancements based on consideration of other aspects.

In one specific embodiment, acquiring the wheel speed information of the vehicle may comprise separately acquiring the wheel speeds of a first wheel and a second wheel at both ends of a wheel axle of the vehicle; and calculating the jitter amount of the wheel speed based on the wheel speed information may comprise calculating an average value of the wheel speeds of the first and second wheels as a reference wheel speed, and calculating a second derivative of the reference wheel speed as the jitter amount.

In one embodiment, for example, when the vehicle traverses uneven roads such as speed bumps, controlling the motor to output compensation torque comprises controlling a front motor connected to a front wheel axle of the vehicle to output a first compensation torque, and controlling a rear motor connected to a rear wheel axle of the vehicle to output a second compensation torque in a direction opposite to the first compensation torque, thus ensuring the total torque consistent to prevent an unintended sense of acceleration.

Furthermore, controlling the motor to output the compensation torque comprises controlling the motor to output the compensation torque for a set duration, to prevent energy loss caused by prolonged motor output. When a bumpy road surface is continuously detected, the jitter control module 60 is repeatedly activated; when the jitter control module 60 is re-activated within a set duration before the timing completes, the timing of the set duration can be reset, thereby ensuring the compensation torque to be output for a set duration starting from the time the jitter control module 60 is reactivated.

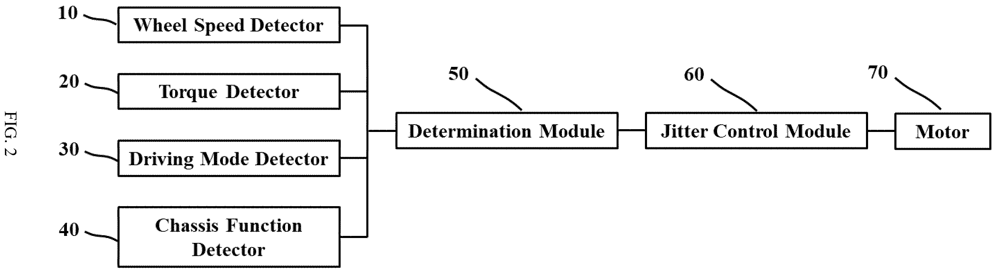

FIG. 2 is a schematic diagram of the structure of a motor jitter suppression control system according to an embodiment of the present application, which is employed to execute the control method shown in FIG. 1. As shown, the control system may comprise a wheel speed detector 10, a torque detector 20, a driving mode detector 30, a chassis function detector 40, a determination module 50 communicatively connected to these detectors, and a jitter control module 60 further communicatively connected to the determination module 50.

The wheel speed detector 10 is configured to detect wheel speed information of a vehicle and calculate a jitter amount of a wheel speed based on the wheel speed information. The torque detector 20 is configured to detect motor actual torque and calculate a torque difference between the motor actual torque and motor target torque. The driving mode detector 30 is configured to detect a driving mode of the vehicle. The chassis function detector 40 is configured to detect an activation status of one or more chassis functional systems related to driving or braking of the vehicle. The determination module 50 is configured to acquire the wheel speed information and the jitter amount from the wheel speed detector 10, to acquire the torque difference from the torque detector 20, to receive the driving mode detected from the driving mode detector 30, and to receive the activation status of the one or more chassis functional systems from the chassis function detector 40. Also, the determination module 50 is configured to issue an activation signal upon determining that the wheel speed falls below a set wheel speed, an absolute value of the jitter amount exceeds a calibration threshold, the torque difference equals zero, the driving mode is a set mode, and none of the one or more chassis functional systems are activated. The jitter control module 60 is activated in response to receiving the activation signal from the determination module 50 to calculate compensation torque based on the jitter amount and transmit a compensation torque signal to a motor 70, thereby controlling the motor 70 to output the compensation torque.

In an optional embodiment, the motor jitter suppression control system may not comprise the driving mode detector 30 or the chassis function detector 40, thus simplifying the system structure and improving the system operating speed. Or, in other embodiments, additional detectors may be included to improve the determination accuracy and sensitivity of the determination module 50, or additional modules may be included to enhance the jitter suppression effect.

In addition, although the determination module 50 and the jitter control module 60 are illustrated as separate modules in Figure 2, these two may also be integrated together in an optional embodiment.

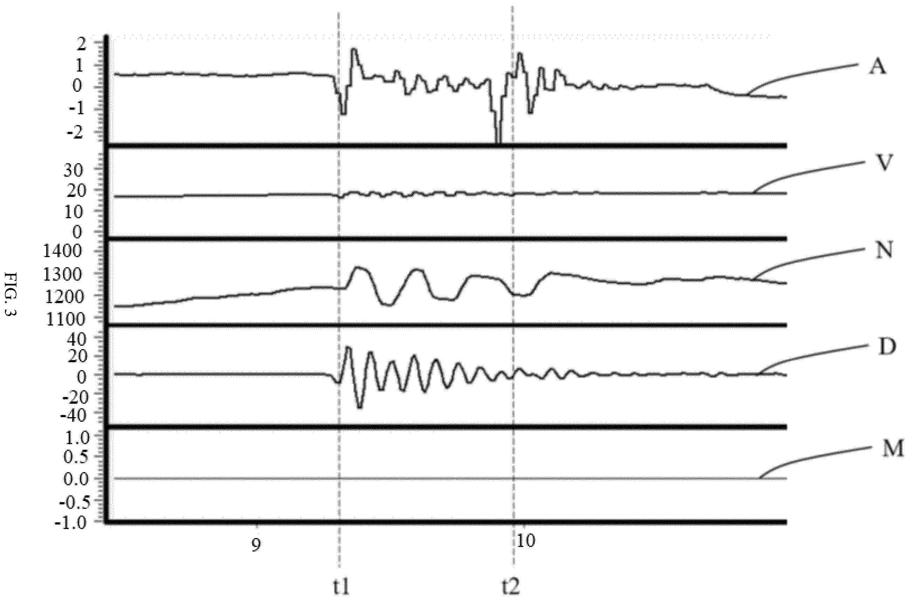

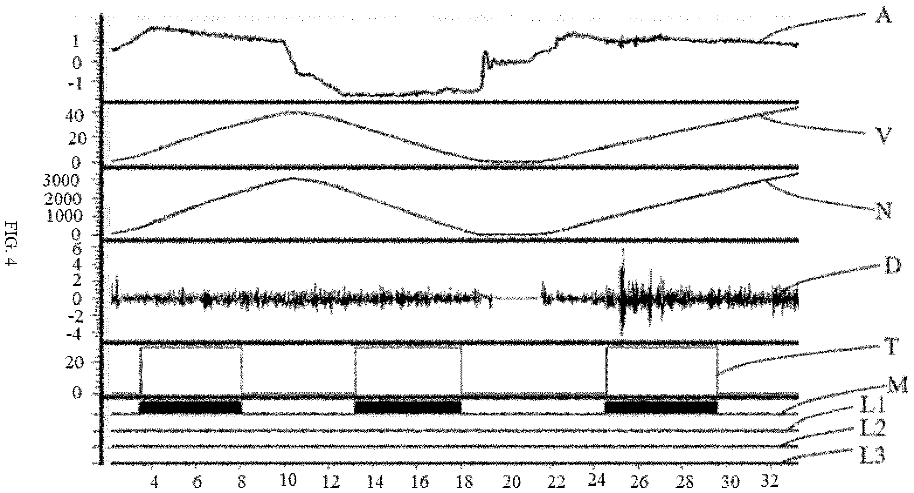

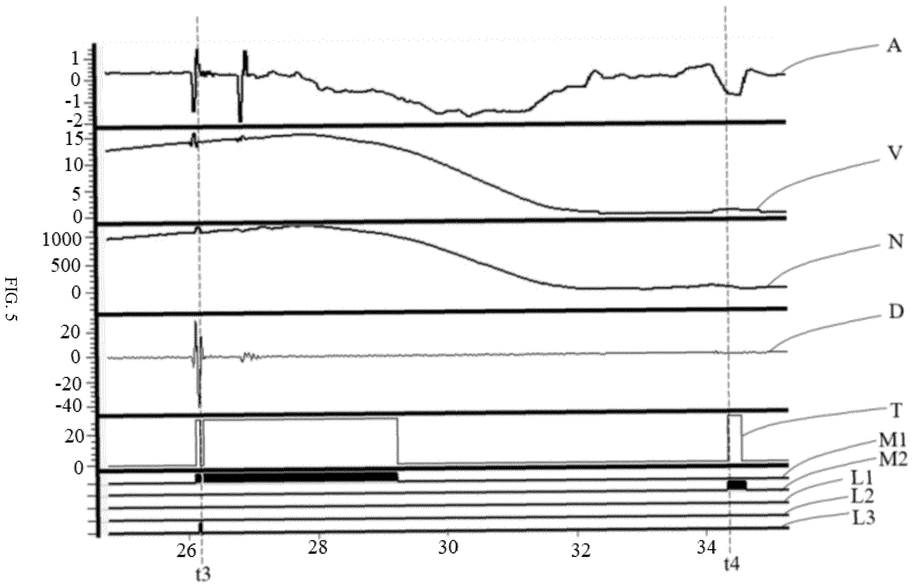

FIG. 3 shows vehicle parameter curves without employing the control method shown in FIG. 1, FIG. 4 displays vehicle parameter curves when the jitter control module 60 is employed but not activated to exert intelligent control, and FIG. 5 presents vehicle parameter curves with the employment of the control method shown in FIG. 1. The following sections illustrate, by way of example, the working process and effects of the motor jitter suppression control method of the present application, with reference to FIGS. 3, 4 and 5. As shown, the horizontal axis represents time (s); A represents the vehicle acceleration (m/s²) curve; V represents the vehicle speed (kph) curve; D represents the vehicle wheel speed jitter amount curve; N represents the motor speed (rpm) curve; T represents the compensation torque (N/m) curve; M represents the activation status of the jitter control module 60; L1 represents the activation status of ABS; L2 represents the activation status of TCS; and L3 represents the activation status of DTC, where M, L1, L2 and L3 are step signals, with a signal value of 1 indicating the function is activated and a signal value of 0 indicating the function is not activated.

As shown in FIG. 3, the vehicle does not employ the motor jitter suppression control method depicted in FIG. 1, and the curve M remains at 0 throughout. During the time interval between t1 and t2, the vehicle is subjected to road excitation, resulting in significant changes in vehicle acceleration A and vehicle speed V. Moreover, a noticeable jitter is detected in the wheel speed with a relatively large jitter amount, and meanwhile an obvious jitter is also found in the motor speed.

As shown in FIG. 4, L1, L2 and L3 remain as horizontal lines throughout, indicating that ABS, TCS and DTC are all in the deactivated status. The vehicle acceleration A and vehicle speed V fluctuate repeatedly, and the wheel speed jitter amount D shows significant variation. For example, in the interval between approximately the 3rd second and the 8th second, the vehicle speed is within a low-speed range below 30 kph, the jitter control module 60 is activated (see the curve M), and the motor outputs compensation torque (see the curve T); after the 8th second, the vehicle speed exceeds 30 kph, and the low-speed condition is no longer satisfied, causing the jitter control module 60 to deactivate; when the vehicle speed again falls within the low-speed range and no other factors prevent activation (e.g., approximately between the 13th second to the 18th second, and between the 24.5th second to the 29.5th second), the jitter control module 60 is reactivated. As a result, the jitter in the motor speed is significantly suppressed, and the motor speed curve N becomes generally smoother. However, during this process, the activation duration of the jitter control module 60 is relatively long, leading to a loss in overall vehicle energy efficiency.

As shown in Figure 5, M1 and M2 respectively represent the activation status of the jitter control module 60 under two specific operating conditions. It can be seen that around the 26th second, the vehicle acceleration curve A and vehicle speed curve V show significant and large changes, the wheel speed jitter amount D fluctuates sharply, while the jitter control module 60 is activated (see the curve M1) and the motor outputs compensation torque (see the curve T). At around time t3, the DTC function is activated (see L3), thereby interrupting the activation of the jitter control module 60 with the compensation torque being no longer output. After the DTC function is shut off, the jitter control module 60 is reactivated (see the curve M1). Additionally, at time t4, the vehicle is subjected to significant road excitation once more (see the curve A), and the wheel speed jitter amount D exhibits significant jitter; at this time, the jitter control module 60 is reactivated (see the curve M2). Due to the short duration of road excitation, both the overall activation time of the jitter control module 60 and the total time during which the motor outputs compensation torque are relatively short. In the embodiment of FIG. 5, the motor speed jitter is effectively suppressed through active compensation torque, and the motor speed curve is relative smooth overall, mitigating the impact of road excitation on motor speed. Moreover, the jitter suppression process is intelligently and automatically activated and deactivated based on activation conditions, effectively controlling the application time of the motor compensation torque, thereby preventing energy loss and significantly improving the NVH (Noise, Vibration, and Harshness) performance of the vehicle.

The above examples primarily illustrate the motor jitter suppression control method, system and vehicle of the present application. Although only some embodiments of the present application have been described, those skilled in the art should appreciate that the present application may be implemented in various other forms without departing from its spirit and scope. Accordingly, the examples and embodiments presented are deemed illustrative rather than limiting, and the present application may encompass various modifications and substitutions without departing from its spirit and scope.

## Claims

1. A motor jitter suppression control method, wherein the method comprises:
acquiring wheel speed information of a vehicle and calculating a jitter amount of a wheel speed based on the wheel speed information;
acquiring motor actual torque and calculating a torque difference between the motor actual torque and motor target torque; and
activating a jitter control module to perform jitter control in response to the wheel speed of the vehicle falling below a set wheel speed, an absolute value of the jitter amount exceeding a calibration threshold and the torque difference equaling zero,
wherein performing the jitter control comprises: acquiring compensation torque based on the jitter amount and controlling a motor to output the compensation torque to suppress jitter of a motor speed.

2. The motor jitter suppression control method according to claim 1, wherein the method further comprises detecting a driving mode of the vehicle and an activation status of one or more chassis functional systems, and the jitter control module is further activated in response to the following conditions: the driving mode is a set mode and none of the one or more chassis functional systems are activated.

3. The motor jitter suppression control method according to claim 1 or 2, wherein acquiring the compensation torque based on the jitter amount comprises: querying, based on the jitter amount, a lookup table of jitter amounts and corresponding compensation torques obtained through experimentation, to obtain the compensation torque.

4. The motor jitter suppression control method according to any of claims 1 - 3, wherein acquiring the wheel speed information of the vehicle comprises separately acquiring the wheel speeds of a first wheel and a second wheel at both ends of a wheel axle of the vehicle; and
calculating the jitter amount of the wheel speed based on the wheel speed information comprises: calculating an average value of the wheel speeds of the first and second wheels as a reference wheel speed, and calculating a second derivative of the reference wheel speed as the jitter amount.

5. The motor jitter suppression control method according to any of claims 1 - 4, wherein controlling the motor to output the compensation torque comprises: turning on a switch tube in a motor controller to control the motor to output the compensation torque.

6. The motor jitter suppression control method according to any of claims 1-5, wherein controlling the motor to output the compensation torque comprises: controlling the motor to output the compensation torque for a set duration.

7. The motor jitter suppression control method according to claim 6, wherein the method further comprises: resetting a timing of the set duration when the jitter control module is re-activated within the set duration, such that the motor outputs the compensation torque for the set duration from the time the jitter control module is reactivated.

8. The motor jitter suppression control method according to any of claims 1-5, wherein controlling the motor to output the compensation torque comprises: controlling a front motor connected to a front wheel axle of the vehicle to output a first compensation torque, and controlling a rear motor connected to a rear wheel axle of the vehicle to output a second compensation torque in a direction opposite to the first compensation torque.

9. A motor jitter suppression control system for performing the method according to any of claims 1-8, the system comprising:
a wheel speed detector configured to detect wheel speed information of a vehicle and calculate a jitter amount of a wheel speed based on the wheel speed information;
a torque detector configured to detect motor actual torque and calculate a torque difference between the motor actual torque and motor target torque;
a determination module communicatively connected to the wheel speed detector and the torque detector and configured to acquire the wheel speed information and the jitter amount from the wheel speed detector, and to acquire the torque difference from the torque detector, wherein the determination module is configured to issue an activation signal upon determining that the wheel speed falls below a set wheel speed, an absolute value of the jitter amount exceeds a calibration threshold, and the torque difference equals zero; and
a jitter control module communicatively connected to the determination module and a motor, wherein the jitter control module is configured to be activated in response to receiving the activation signal, thus obtaining compensation torque based on the jitter amount and transmitting a compensation torque signal to the motor to control the motor to output the compensation torque.

10. The motor jitter suppression control system according to claim 9, wherein the system further comprises a driving mode detector and a chassis function detector communicatively connected to the determination module, the driving mode detector being configured to detect a driving mode of the vehicle, and the chassis function detector being configured to detect an activation status of one or more chassis functional systems of the vehicle, wherein the one or more chassis functional systems comprise one or more of an anti-lock braking system, a traction control system and a drag torque control system; and the determination module is configured to acquire the driving mode detected from the driving mode detector and information of the activation status from the chassis function detector, and to issue the activation signal upon determining that the driving mode is a set mode and none of the one or more chassis functional systems are activated.

11. A vehicle, the vehicle comprising the motor jitter suppression control system according to claim 9 or 10.
